# EUROPEAN PATENT APPLICATION

(11) **EP 4 557 114 A1**
(43) Date of publication of application: **21.05.2025**
(21) Application number: 23210777.1
(22) Date of filing: 17.11.2023
(51) Int. Cl.: G06F 15/78

(54) **DRONE CONTROLLER**

(71) Applicant: "Rogoz" Spolka z Ograniczona Odpowiedzialnoscia- A-Spolka Komandytowo-Akcyjna, 20-135 Lublin (PL)
(72) Inventor: Slonimski, Piotr, 87-148 Papowo Torunskie (PL); Szczepanik, Piotr, 20-722 Lublin (PL); Antemijczuk, Oleg, 40-645 Katowice (PL); Marek, Dariusz, 44-122 Gliwice (PL); Gramala, Pawel, 41-814 Zabrze (PL)
(74) Representative: Bury & Bury

(57) **Abstract**

A drone controller realized on a printed circuit board (PCB) comprising a system on chip microcontroller (SoC) and field-oriented controllers (FOC) connected thereto, wherein the motor controllers (FOC) have corresponding sets of power transistors (T) for brushless direct current motors, according to the invention is integrated in a single printed circuit board (PCB) being multilayer printed circuit board (PCB) having at least three layers. Power transistors (T) are arranged in proximity of edges of the printed circuit board (PCB), and have control resistors configured so that rising time when switching the transistor (T) is greater than 0.5 µs. The printed circuit board (PCB) has a central area comprising sensory and digital circuitry. Said central area of the printed circuit board (PCB) is at least partly surrounded by metallization areas (GA) separating it from the power transistors (T) and the motor controllers (FOC). A power supply for components arranged in said central area is provided on a layer of the printed circuit board (PCB) shielded from both sides by metallization provided on the other layers, power supply ports of the components provided in the central area are protected with power supply filters.

## Description

### FIELD OF THE INVENTION

The invention relates to an onboard drone controller handling remote communication, providing steering signals for motors and receiving sensory signals from other onboard modules.

### STATE OF THE ART

US20120056041 discloses an unmanned flying vehicle using a PCB including a main board controlling power supply and flying operation, a motor rotating a propeller by changing electric energy into mechanical energy, a PCB frame changing a signal from a remote controller and connecting the main board with the motor, a propeller generating an impellent force by from rotation by the motor, a receiver receiving a control signal of the remote controller, and a remote controller controlling a motor rotation speed of a quadrotor and direction change. The structure of the unmanned flying vehicle is simplified so that the flying vehicle can be down-sized and light-weighted, and assemblability is improved as frame portion is formed of a print circuit board.

CN114987747 discloses a nano-type unmanned aerial vehicle, which comprises a flight control panel, an unmanned aerial vehicle body and an unmanned aerial vehicle body. A driving units are fixed at the motor through holes and are used for providing driving force. A management chip is arranged on the flight control board and is used for controlling the driving unit. An environment sensing unit is arranged on the flight control board and is used for sensing environment information. Various sensors are fused to enhance the environment perception capability of the nano-type unmanned aerial vehicle, so that the autonomous flight and active obstacle avoidance of the nano-type unmanned aerial vehicle are realized, and the nano-type unmanned aerial vehicle is more autonomous and intelligent.

US2017006148 discloses an UAV control device designed to be compact in structure. The proposed UAV control device includes: a control circuit board, a navigation module disposed on the control circuit board, a wireless communication module disposed on the control circuit board and coupled to the navigation module, a first antenna connection module disposed on the control circuit board and coupled to the wireless communication module, wherein the first antenna connection module is configured to connect with a first antenna, a positioning module disposed on the control circuit board and coupled to the navigation module, a second antenna connection module disposed on the control circuit board and coupled to the positioning module, wherein the second antenna connection module is configured to connect with a second antenna, a set of rotor driving modules and one or more camera connection modules disposed on the control circuit board and coupled to the navigation module. The first antenna connection module and the second antenna connection module are disposed at two opposite sides of the control circuit board, to reduce the interference between their respective wireless signals. This introduces certain difficulties in assembling and does not solve a problem of interferences coming from the motors and driving circuit.

CN206546528 discloses a flight controller with shielding to prevent interferences.

US11411472B2 teaches that brushless direct-current electric (BLDC) motor also known as an electronically commutated (EC) motor can provide certain advantages including reduction of electromagnetic interferences. A BLDC motor is a synchronous motor that is powered by a DC electric source via an integrated inverter/switching power supply, which produces an alternating electric signal to drive the motor. The alternating electric signal comprises a bi-directional current. Brushless motors offer several advantages over brushed DC motors, including high torque to weight ratio, more torque per watt (increased efficiency), increased reliability, reduced noise, longer lifetime (no brush and commutator erosion), elimination of ionizing sparks from the commutator, and overall reduction of electromagnetic interference (EMI) . However, for motor controllers located on a PCB still constitute source of interferences for neighboring devices as BLDC motors require fast switching of high current signals (up to 150 A) which is a source of interference in a PCB itself. Moreover, current sensing required for controlling BLCD is also susceptible to interferences from transmission module. Both interferences can occasionally cause a failure of a drone. Incidents of that kind are especially harmful when drone is used in drone swarm. In a swarm of many drones even one failure during the flying may cause significant damage. Therefore, susceptibility to failures due to interferences should be reduced.

Interferences related to BLDC switching can be mitigated if elements susceptible to interferences are moved to different boards. That unfortunately entails need to use sandwiched PCB and is difficult to apply in small drones.

### PROBLEM TO BE SOLVED

It is an object of the present invention to solve a problem of integrating a drone controller in single PCB so that reduce the risk of failures in a drone having BLDC motors, especially a small drone to be used in drone swarm.

### SUMMARY OF THE INVENTION

A drone controller according to the invention is realized on a printed circuit board comprising a microcontroller and motor controllers connected thereto. The motor controllers have corresponding sets of power transistors for driving brushless direct current motors. The microcontroller is a system on chip microcontroller. The motor controllers are field-oriented controllers. The printed circuit board has at least three layers. The drone controller has additionally following components: an inertial measurement unit, a radio positioning unit, a compass unit, a pressure sensor unit, and a communication unit. Said components are provided on the printed circuit board. The motor controllers are arranged in proximity of corners of the printed circuit board. The sets of the power transistors are arranged in proximity of edges of the printed circuit board. The driving transisotrs have control resistors configured so that rising time of switching transistor is greater than 0.5 µs. The time is defined as time between 10% of the output voltage and 90% of the output voltage. The printed circuit board has a central area comprising the microcontroller, the inertial measurement unit, the radio positioning unit, the compass unit, the pressure sensor unit, and the communication unit. Said central area of the printed circuit board is at least partly surrounded by metallization areas (that can be used for delivering power supply) and ground contacts separating it from the power transistors and the motor controllers. A power supply for components arranged in said central area is provided on a layer of the printed circuit board shielded from both sides by metallization provided on the other layers. Power supply ports of the components provided in the central area are protected with power supply filters. This configuration helps protecting the modules susceptible to failure due to interferences from EMI generated when switching the communication module and the sensory modules from interferences generated by the motor driving transistors.,

Advantageously, the printed circuit board has at least six layers and the motor controllers are arranged in a substantially symmetrical manner in the corners of the printed circuit board on a first layer thereof. The power transistors (motor driving transistors) are arranged in pairs on the first layer (top) and a sixth layer (bottom) of the printed circuit board so that drains of the power transistors located on the different layers are connected by vias. Said vias form soldering fields for power supply cables of the drone motors. The components provided on the central area namely: the microcontroller, the inertial measurement unit, the radio positioning unit and an antenna connector therefor, the compass unit. The pressure sensor unit the communication unit and an antenna connector therefor are located on the first layer while the power transistors of the motor controllers are located outside of the central area and are provided with buffer capacitors connected between the ground and the metallization areas surrounding the central area of the printed circuit board and connected to power supply. The motor controllers are provided with engine current sensing resistors located on the sixth layer and are arranged between sources of the power transistors and the ground. Traces between the motor current sensing resistors and the motor controllers are arranged on a third layer. Said traces between the current sensing resistors and the motor controllers are differential pairs arranged so that connectors of each current sensor resistor are connected with respective motor controller with a pair of traces having substantially the same length. That allows exactly the same programs to be run in FOC as the sensing conditions are substantially the same. Even better alignment can be obtained with the differential pairs being substantially symmetrical to each other. A second layer comprises a ground plane. A fourth layer comprises power supply planes for the central area of the printed circuit board. A fifth layer comprises power supply planes for the power transistors this configuration allows obtaining high currents up to 150 A being delivered without cooling with radiator due to wide power supply path as well as for separating these currents from differential paths and sensory modules sensitive to interferences.

Advantageously, the microcontroller is provided with a wake-on-lan module.

Optionally, the controller comprises additional, redundant components: the inertial measurement unit and/or the radio positioning unit and/or the compass unit and/or the pressure sensor unit and/or the communication unit.

### BRIEF DESCRIPTION OF FIGURES

Embodiments of the invention have been described below in greater detail with reference to attached drawing.
Fig. 1 Shows simplified block diagram of an embodiment of the controller according to the invention.
Fig. 2 Shows schematically elements provided on the first (top) layer of the printed circuit board of the controller according to said embodiment.
Fig. 3 shows metallization and holes of the first layer of the printed circuit board according to the invention.
Fig. 4 shows metallization and holes of the third layer of the printed circuit board according to the invention.
Fig. 5 shows metallization and holes of the fourth layer of the printed circuit board according to the invention.
Fig. 6 shows metallization and holes of the fifth layer of the printed circuit board according to the invention.
Fig. 7 shows metallization and holes of the sixth layer of the printed circuit board according to the invention.

### DESCRIPTION OF EMBODIMENTS OF THE INVENTION

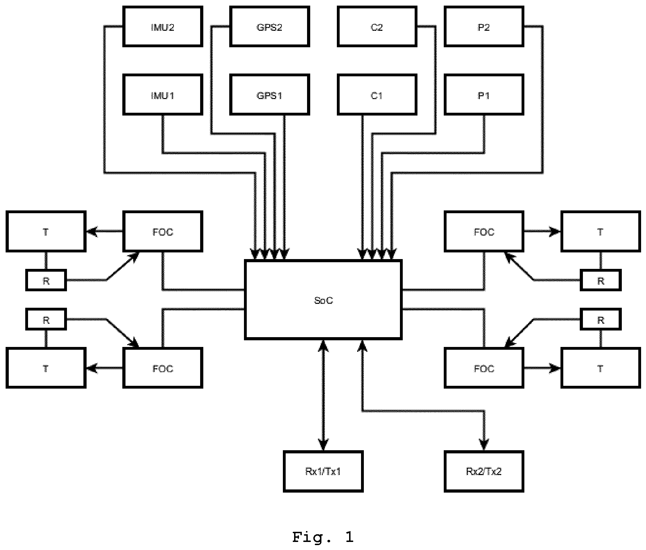

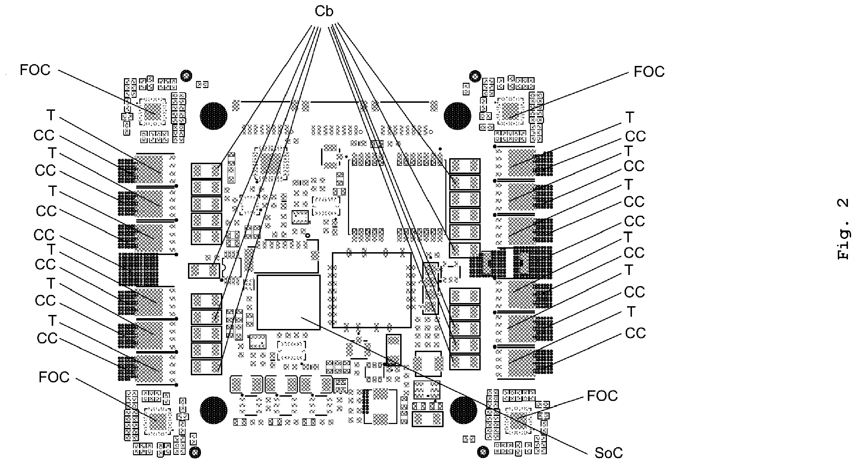

A simplified block diagram of an embodiment of the drone controller according to the invention is shown in Fig. 1. The controller has a microcontroller **SoC** (System-on-Chip) ARM A53 operating under control of a linux system. As shown in Fig. 2 the microcontroller **SoC** realized on a printed circuit board **PCB** comprising a microcontroller **SoC** is placed in the central part of the printed circuit board **PCB.**

The controller is adapted to be used in a quadricopter having four BLDC motors. Every motor is controlled with a set of six power transistors **T** arranged in pairs of n-type transitor and p-type transistor. Each pair comprises one transistor **T** mounted on the first (top) layer **L1** and one transistor **T** mounted on the sixth (bottom) layer **L6.** Drains of the transistors **T** in the pair are connected with vias extending through all layers **L1, L3, L4, L5, L6** of the printed circuit board **PCB.** Driving voltage for the transistors **T** is provided by field-oriented controllers **FOC** located on the top layer **L1** of the printed circuit board **PCB** and steered by the microcontroller **SoC.** The sets of power transistors **T** are arranged in proximity of edges of the printed circuit board **PCB.** Switching time of the transistors **T** is determined with control resistors connected thereto. Power p-type transistors **T** are located on the first (top) layer **L1** while n-type transistors **T** are located on the sixth (bottom) layer **L6.** In the present embodiments models HSBA100P03 and HSBA4048 are used. The control resistors are selected so that rising time defined voltage-wise at range 10% ÷ 90% is greater than 0.5 µs - in the present embodiment it has been obtained with the control resistors of 10 Ω.

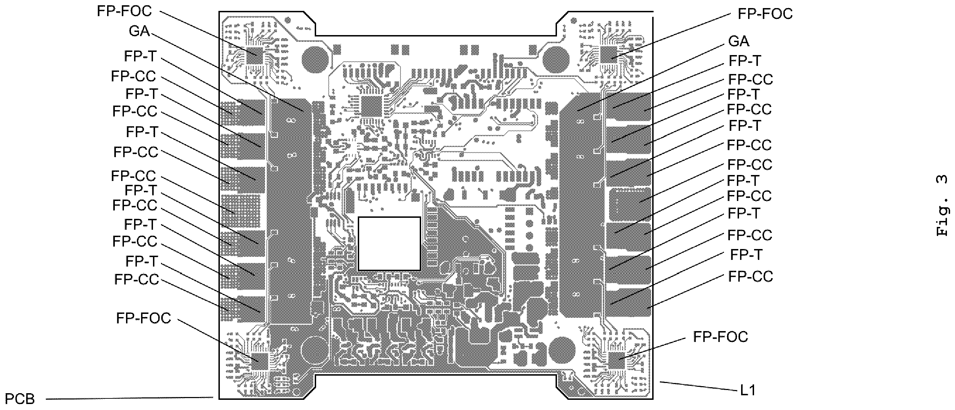

Footprints **FP-FOC** for soldering motor controllers **FOC** are shown in Fig. 3.

The printed circuit board **PCB** has a central area comprising:
- a microcontroller **SoC,**
- an inertial measurement unit **IMU1**
- a radio positioning unit **GPS1**
- a compass unit **C1,**
- a pressure sensor unit **P1,** and
- a communication unit **Rx1/Tx1,**
all of which are provided with power supply filters to avoid interferences. The central area at the first layer **L1** is protected by metallization planes located on other layers. The metallization planes also prevent communication unit **Tx1/Rx1** from interfering with sensing the current of the power transistors **T** with the current sensing resistors **R.**

As shown in Fig. 2 and 3, the central area of the first layer **L1** of the printed circuit board **PCB** is separated from the transistors **T,** which are located closer to the edges of said printed circuit board **PCB,** and from the motor controllers **FOC** with the metallization areas **GA** connected to ground via blocking capacitors **Cb.** The metallization areas **GA** partly surround the central area.

Each field-oriented controller **FOC** is used to control one motor via set of six (three pairs) transistors **T.** The controlling function requires a source current probing. Said probing is done with the resistors **R** mounted on the sixth layer **L6.**

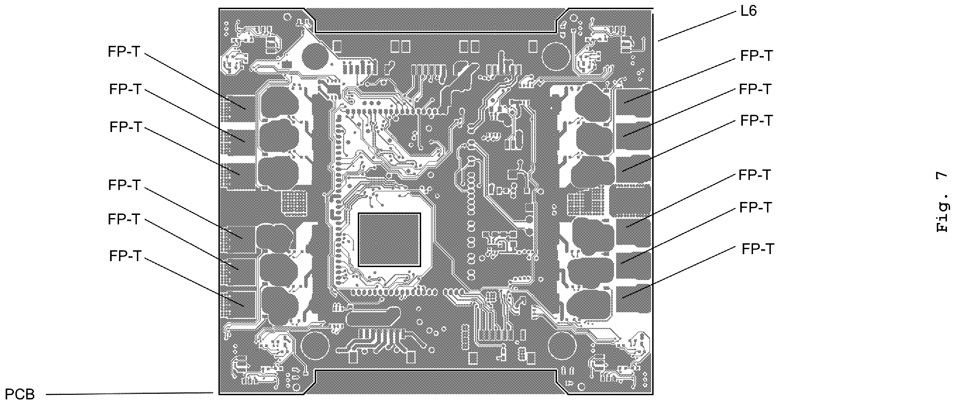

Connector pads **CC** for connecting cables connecting external BLDC motors are reinforced with vias forming structutre **FP-CC** protruding through all boards layers. This enhances a heat dissipation and prevents detaching of the pads even in high temperature. Footprints **FP-T** for soldering the power transistors **T** are visible in Fig. 3 and 7.

The printed circuit board **PCB** has at least three layers to provide proper separation but can have more. In the present embodiment six layers are used.

Motor controllers **FOC** are arranged in a substantially symmetrical manner in the corners of the printed circuit board **PCB** on its first layer **L1.**

The power transistors **T** are arranged in pairs on the first layer **L1** and a sixth layer **L6** of the printed circuit board **PCB** so that drains of the power transistors **T** located on the different layers are connected by vias, wherein said vias form soldering fields for power supply cables of the drone motors (not shown).

The components provided on the central area of the printed circuit board **PCB:**
- the microcontroller **SoC,**
- the inertial measurement unit **IMU1**
- the radio positioning unit **GPS1** and an antenna connector therefor,
- the compass unit **C1**
- the pressure sensor unit **P1,**
- the communication unit **Rx1/Tx1** and an antenna connector therefor
are located on the first layer **L1** while the power transistors **T** of the motor controllers **FOC** are located outside the central area and are provided with buffer capacitors **Cb** connected between the power supply in the metallization area **GA** and the ground contacts surrounding the central area of the printed circuit board **PCB.**

The controller optionally comprises additional, redundant components:
- the inertial measurement unit **IMU2,**
- the radio positioning unit **GPS2** and antenna connector therefor,
- the compass unit **C2,**
- the pressure sensor unit **P2,**
- the communication unit **Rx2/Tx2.**

The motor controllers **FOC** are provided with the engine current sensing resistors **R** located on the sixth layer **L6** and are arranged between sources of the power transistors **T** and the ground. Position of a rotor of the BLDC motor is determined on a base of current sensed in conditions in which no power supply is provided to particular coil of the BLDC motor. The current sensing resistors **R** are connected between source and ground of the bottom layer transistors **T.**

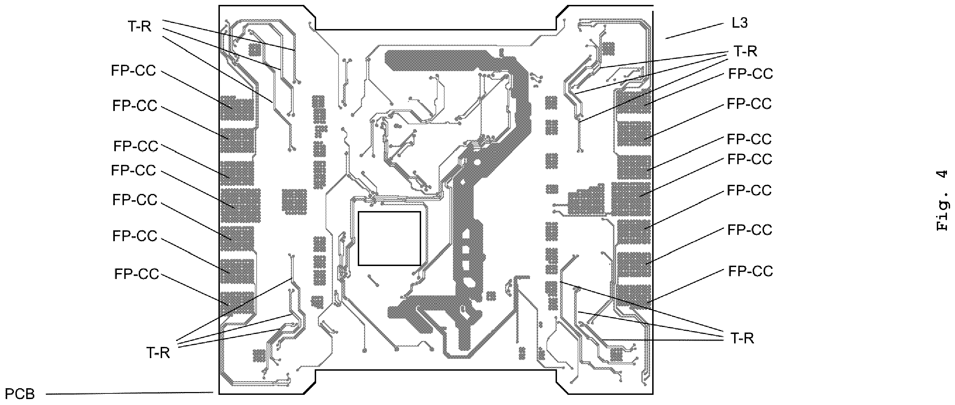

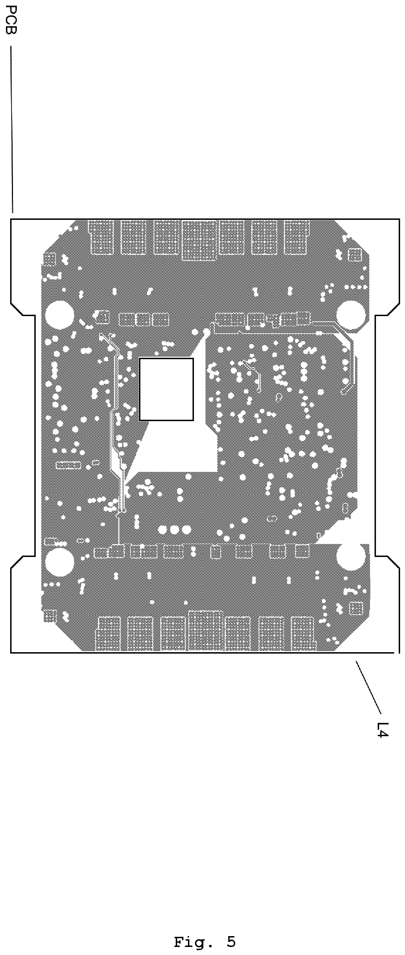

As shown in Fig. 4 traces **T-R** between the current sensing resistors **R** and the motor controllers **FOC** are arranged on a third layer **L3.** The traces **T-R** are differential pairs arranged so that connectors of each current sensor resistor **R** are connected with respective motor controller **FOC** with a pair of traces **T-R** having substantially the same length. The differential pairs are substantially symmetrical to each other. The current sensing resistors **R** have 0.001 Ω therefore alignment of lengths of traces **T-R** therefor is important. The traces **T-R,** are hence shielded with planes of power supply and ground from interferences. Namely:
- the second layer of the printed board circuit **PCB** comprises a ground plane,
- the fourth layer **L4** shown in Fig. 5 comprises large power supply planes for the central area of the printed circuit board **PCB,**

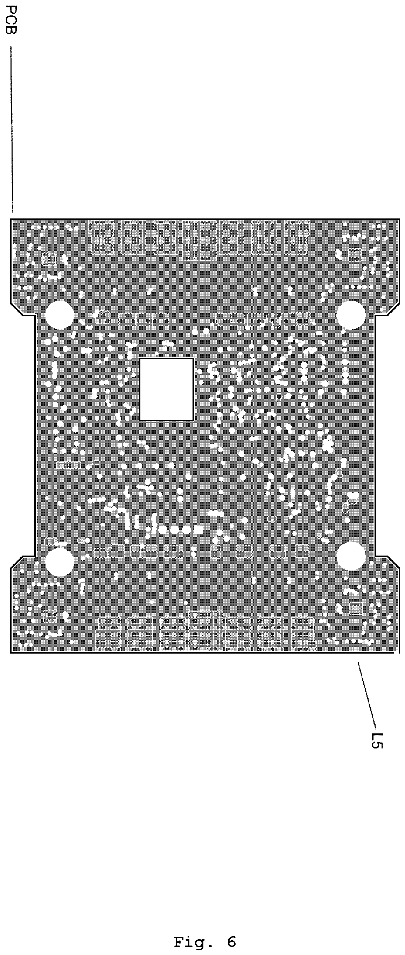

The fifth layer **L5** shown in Fig. 6 comprises power supply planes for the power transistors **T.** This configuration allows guiding high currents up to 150 A, and yet shielding sensitive components from related EMIs. This configuration also allows for application high power LEDs controlled by the controller and used in swarm shows.

The microcontroller **SoC** is mounted in an opening cut out in the printed circuit boards **PCB** and has pads located on the sixth (bottom) layer **L6** and some elements in the first (top) layer **L1.**

The microcontroller **SoC** is provided with a wake-on-lan module. It is a fail-safe solution for swarm drones allowing all swarm elements to be turned on at the same time and therefore battery depletion can be predictable and the same for all drones in the swarm.

The invention provides controllers integrated on a single PCB board in a manner reducing risk of failure due to interferences between the motor control signals and the sensors and microcontroller or due to interferences of communication signals with current sensing. Invention is particularly suited for application in swarm of drones.

## Claims

1. A drone controller realized on a printed circuit board (**PCB**) comprising a microcontroller (**SoC**) and motor controllers (**FOC**) connected thereto, wherein the motor controllers (**FOC**) have corresponding sets of power transistors (**T**) for driving brushless direct current motors, **characterized in that** the microcontroller is a system on chip microcontroller (**SoC**), the motor controllers are field-oriented controllers (**FOC**) and
the printed circuit board (**PCB**) has at least three layers,
the drone controller has additionally following components:
an inertial measurement unit (**IMU1, IMU2**),
a radio positioning unit (**GPS1, GPS2**),
a compass unit (**C1**, **C2**),
a pressure sensor unit (**P1, P2**), and
a communication unit (**Rx1/Tx1, Rx2/Tx2**) provided on the printed circuit board (**PCB**), wherein
the motor controllers (**FOC**) are arranged in proximity of corners of the printed circuit board (**PCB**)
the sets of the power transistors (**T**) are arranged in proximity of edges of the printed circuit board (**PCB**), and have control resistors configured so that rising time of switching transistor (**T**) is greater than 0.5 µs
the printed circuit board (**PCB**) has a central area comprising
the microcontroller (**SoC**),
the inertial measurement unit (**IMU1, IMU2**),
the radio positioning unit (**GPS1, GPS2**),
the compass unit (**C1, C2**),
the pressure sensor unit (**P1, P2**), and
the communication unit (**Rx1/Tx1, Rx2/Tx2**) so that
said central area of the printed circuit board (**PCB**) is at least partly surrounded by metallization areas (**GA**) separating it from the power transistors (**T**) and the motor controllers (**FOC**),
a power supply for components arranged in said central area is provided on a layer of the printed circuit board (**PCB**) shielded from both sides by metallization provided on the other layers,
power supply ports of the components provided in the central area are protected with power supply filters.

2. Drone controller according to claim 1, wherein the printed circuit board (**PCB**) has at least six layers (**L1, L3, L4, L5, L6)** and the motor controllers (**FOC**) are arranged in a substantially symmetrical manner in the corners of the printed circuit board (**PCB**) on a first layer (**L1**) thereof,
the power transistors (**T**) are arranged in pairs on the first layer (**L1)** and a sixth layer (**L6**) of the printed circuit board (**PCB**) so that drains of the power transistors (**T**) located on the different layers are connected by vias, wherein said vias form soldering fields for power supply cables of the drone motors,
the components provided on the central area, namely:
the microcontroller (**SoC**),
the inertial measurement unit (**IMU1, IMU2**),
the radio positioning unit (**GPS1, GPS2**) and an antenna connector therefor,
the compass unit (**C1, C2**),
the pressure sensor unit (**P1, P2**),
the communication unit (**Rx1/Tx1, Rx2/Tx2**) and an antenna connector therefor
are located on the first layer (**L1**) while the power transistors (**T**) of the motor controllers (**FOC**) are located outside of the central area and are provided with buffer capacitors (**Cb**) connected between the ground and the metallization areas (**GA**) surrounding the central area of the printed circuit board (**PCB**) and connected to power supply,
the motor controllers (**FOC**) are provided with engine current sensing resistors (**R**) located on the sixth layer (**L6**) and are arranged between sources of the power transistors (**T**) and the ground, wherein
traces (**T-R**) between the motor current sensing resistors (**R**) and the motor controllers (**FOC**) are arranged on a third layer (**L3**) wherein said traces (**T-R**) between the current sensing resistors (**R**) and the motor controllers (**FOC**) are differential pairs arranged so that connectors of each current sensor resistor (**R**) are connected with respective motor controller (**FOC**) with a pair of traces (**T-R**) having substantially the same length, wherein
a second layer comprises a ground plane,
a fourth layer (**L4**) comprises power supply planes for the central area of the printed circuit board (**PCB**), and
a fifth layer (**L5**) comprises power supply planes for the power transistors (**T**).

3. Drone controller according to claim 1 or 2, wherein, the microcontroller (**SoC**) is provided with a wake-on-lan module.

4. Drone controller according to claim 1 or 2 or 3 comprising additional, redundant components:
the inertial measurement unit (**IMU2**) and/ or
the radio positioning unit (**GPS2**) and/ or
the compass unit (**C2**) and/ or
the pressure sensor unit (**P2**) and/ or
the communication unit (**Rx2/Tx2**)**.**
